# EUROPEAN PATENT SPECIFICATION

(11) **EP 0 568 339 B1**
(45) Date of publication and mention of the grant of the patent: **14.02.1996**
(21) Application number: 93303313.6
(22) Date of filing: 28.04.1993
(51) Int. Cl.: H01M 10/04, H01M 2/20, H01M 2/22

(54) **Battery comprising cells connected in series**
Seriengeschaltete Zellen enthaltende Batterie
Batterie comprenant des cellules couplées en série

(30) Priority: 28.04.1992 JP 135806/92
(43) Date of publication of application: 03.11.1993
(73) Proprietor: HONDA GIKEN KOGYO KABUSHIKI KAISHA, Minato-ku Tokyo (JP); YUASA CORPORATION, Takatsuki-shi, Osaka 569 (JP)
(72) Inventor: Nakazawa, Yoshihiro, Asaka-shi, Saitama-ken (JP); Yamane, Mitsuo, Takatsuki-shi, Osaka (JP); Bogauchi, Takehito, Kobe-shi, Hyogo-ken (JP)
(74) Representative: Piesold, Alexander J.

(56) References cited:
- CH-A- 118 809
- US-A- 2 812 378
- US-A- 4 572 878
- PATENT ABSTRACTS OF JAPAN vol. 7, no. 247 (E-208)(1392) 2 November 1983

## Description

The present invention relates to a combination battery comprising a plurality of cells connected in series, e.g., lead cells, nickel-cadmium cells, nickel-zinc cells, nickel-hydrogen cells or the like.

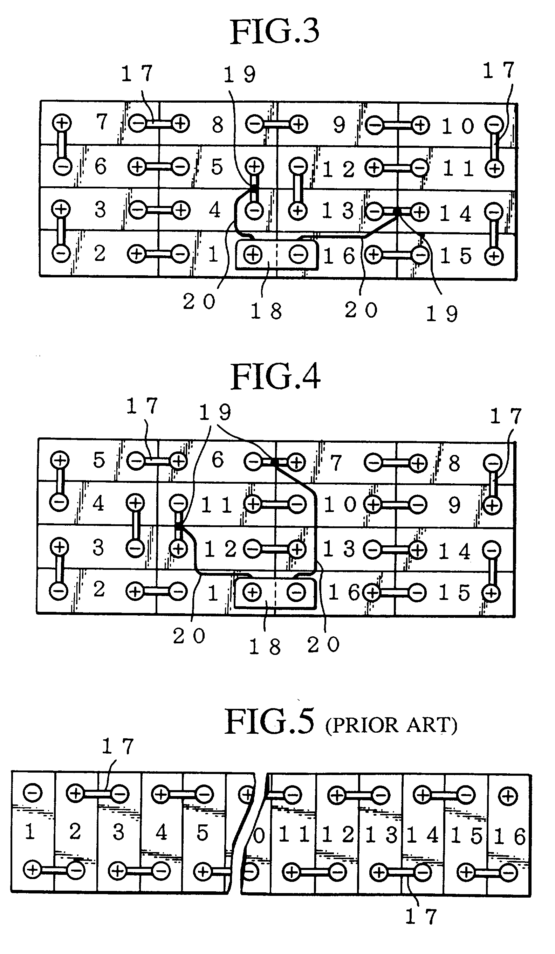

Conventionally, in order to make a combination battery by connecting a plurality of cells in series, a plurality of cells 1 to 16 having the same rectangular shape each of which is provided with plus (positive) and minus (negative) terminals on the upper surface thereof, are generally placed in a row so that each of the cells has an arrangement in polarity that is different from that of the adjacent cell thereof, then the negative terminal of each of the cells is connected to the positive terminal of the adjacent cell to the left through an electrically conductive connecting plate 17, as shown in FIG. 5.

The temperature of the combination battery during charging and discharging thereof is generally detected by a measuring element (not shown) attached to the combination battery, by means of measuring wires connected to a measuring device or a battery charger.

However, according to the construction of the conventional combination battery, since the negative terminal of the cell 1 and the positive terminal of the cell 16 constitute the negative terminal and the positive terminal of the combination battery respectively and these terminals are arranged at a distance from each other, it is therefore impossible to provide the positive and negative terminals of the combination battery at positions near to each other unless separate connecting wires are used.

One of the sources of electrical power loss of a combination battery is through the leakage of current when water drops accumulate on the surface of the combination battery or when the battery is provided under conditions of high humidity. The power loss increases when the number of the connected cells is increased to constitute a combination battery with high voltage.

The present invention was developed in view of the above circumstances.

Therefore, it is an object of the present invention to provide a combination battery which can overcome the disadvantages in the arrangement wherein the positive and negative terminals of the combination battery are arranged at a distance from each other, or wherein it is impossible to provide the terminals of the combination battery at positions near to each other unless separate connecting wires are used.

It is known from US-A-2812378 to provide a combination battery comprising: a plurality of cells connected in series and arranged in rows and columns, each of the cells in a row having the same arrangement of polarity as that of the adjacent cell in that row, each of the cells in a column having an arrangement of polarity different from that of the adjacent cell in that column.

The present invention is characterised in that the battery comprises 16 cells arranged in a matrix of 4 rows and 4 columns, there being a waterproof coupler through which the positive and negative terminals of the battery are drawn from two cells which are adjacent to each other, one of the two cells being in the second column and the other of the two cells being in the third column.

Thus a combination battery is provided wherein the positive and negative terminals are provided by two cells adjacent to each other. It is possible and extremely easy to connect the terminals to the outside by using one coupler, without wires for connecting to the coupler. Furthermore, it is possible to prevent electrical power loss through leakage of the current by using a waterproof coupler.

Thus, at least in the preferred forms of the invention, there is provided an arrangement and connection of the combination battery which can very easily obtain the output thereof using one coupler and also prevent electrical power loss through leakage of the current.

In addition, at least in the preferred forms of the invention, there is provided a combination battery which can not only obtain the electrical output of the combination battery but can also obtain the temperature output by using a coupler so that it is possible to precisely charge with electricity for an appropriate amount of time in accordance with the temperature thereof during charging, and to detect any extreme rise in temperature or the like during discharging.

It is for example possible to obtain a temperature measurement of the battery via an element for measuring the temperature which is fixed with epoxy resin or the like, or a plate connecting the adjacent cells. In this manner, it is possible to communicate the temperature output and the output of the combination battery to the outside via the coupler.

The output terminals of the temperature sensor can be provided on the coupler in a single body, so that the charge or discharge of the combination battery can be carried out by monitoring the temperature of the battery. Therefore, it is possible to improve precision of the electrical charge and to detect the flow of excessive current.

Certain preferred embodiments of the present invention will now be described by way of example and with reference to the accompanying drawings, in which:
Fig. 1 is a plan view showing an embodiment of an arrangement of the cells and a connecting method according to the combination battery of the present invention;
Fig. 2 is a plan view showing another embodiment of an arrangement of the cells and a connecting method according to the combination battery of the present invention;
Fig. 3 is a plan view showing an additional embodiment of an arrangement of the cells and a connecting method according to the combination battery of the present invention;
Fig. 4 shows yet another embodiment of an arrangement of the cells and a connecting method according to the combination battery of the present invention; and
Fig. 5 is a plan view showing an example of an arrangement of the cells and a connecting method according to the conventional combination battery.

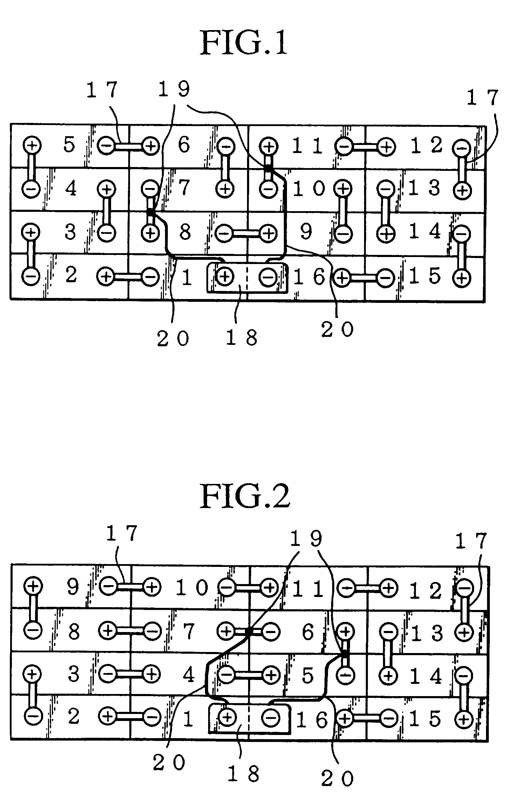

Fig. 1 shows a first embodiment of a combination battery according to the present invention. Reference numerals 1-16 denote cells, and numeral 17 denotes a connecting plate for connecting the cells. The combination battery comprises 16 cells 1-16 connected in series which are arranged in a matrix of 4 rows and 4 columns, and a waterproof coupler 18 through which the positive and negative terminals of the combination battery can be drawn from two cells 1 and 16 which are adjacent to each other. One 1 of the two cells is on the second column in the first row and the other 16 of the two cells is on the third column in the first row. Each of the cells on a row has the same arrangement of polarity as that of the adjacent cell on the row therein. Each of the cells on a column has an arrangement of polarity different from that of the adjacent cell on the column therein.

The cells 1-16 are electrically connected by the connecting plates 17 from the cell 1 and upward in series. That is, in the first embodiment of the present invention, these 16 cells are connected in series, from the cell 1 of the second column in the first row to the cell 16 of the third column in the first row, through the cells 2, 3, 4 and 5 of the first, second, third and fourth rows in the first column, the cells 6, 7 and 8 of the fourth, third and second rows in the second column, the cells 9, 10 and 11 of the second, third and fourth rows in the third column, and the cells 12, 13, 14 and 15 of the fourth, third, second and first rows in the fourth column, in order. Therefore, the positive terminal and the negative terminal of the combination battery can be drawn from the cell 1 and the cell 16 adjacent to each other, so that it is possible to easily connect the terminals to the outside by using one coupler.

Numeral 19 denotes a thermistor for the temperature measurement which is a thermistor "102 AT-1" made by Ishizuka Electronics, Co., LTD. The thermistor 19 detects temperature of the cells 7 and 8 and the temperature of the cells 10 and 11. The output of the thermistor can be communicated to the outside through connecting wires 20 and output terminals provided on a coupler of a waterproof type 18 within a single body.

Similarly, other embodiments are shown in FIGS. 2, 3 and 4. In these embodiments, the arrangement and the polarity of the cells are the same as those of FIG. 1. However, the connecting order of the cells in FIGS. 2-4 are different from that in FIG. 1. The cells 1-16 are electrically connected from the cell 1 and-upward in series by using connecting plates 17.

That is, in the second embodiment as shown in FIG. 2, the 16 cells are connected in series, from the cell 1 of the second column in the first row to the cell 16 of the third column in the first row, through the cell 2 of the first column in the first row, the cells 3, 4 and 5 of the first, second and third columns in the second row, the cells 6, 7 and 8 of the third, second and first columns in the third row, the cells 9, 10 and 11 of the first, second and third columns in the fourth row, and the cells 12, 13, 14 and 15 of the fourth, third, second and first rows in the fourth column, in order.

In the third embodiment as shown in FIG. 3, the 16 cells are connected in series, from the cell 1 of the second column in the first row to the cell 16 of the third column in the first row, through the cell 2 of the first column in-the first row, the cells 3 and 4 of the first and second columns in the second row, the cells 5 and 6 of the second and first columns in the third row, the cells 7, 8, 9 and 10 of the first, second, third and fourth columns in the fourth row, the cells 11 and 12 of the fourth and third columns in the third row, the cells 13 and 14 of the third and fourth columns in the second row, and the cell 15 of the fourth column in the first row, in order.

In the fourth embodiment as shown in FIG. 4, the 16 cells are connected in series, from the cell 1 of the second column in the first row to the cell 16 of the third column in the first row, through the cells 2, 3, 4 and 5 of the first, second, third and fourth rows in the first column, the cells 6, 7 and 8 of the second, third and fourth columns in the fourth row, the cells 9, 10 and 11 of the fourth, third and second columns in the third row, the cells 12, 13 and 14 of the second, third and fourth columns in the second row, and the cell 15 of the fourth column in the first row, in order.

In the above described embodiments, and similar to the embodiment of FIG. 1, the output of a thermistor 19 for temperature measurement is connected to the waterproof type coupler 18 through the connecting wires 20, so that it is possible to communicate the output of the combination battery and the temperature output of the battery to the outside through the waterproof type coupler 18.

As described above, the positive and negative terminals of the combination battery which has 16 cells connected in series can be drawn from the two cells adjacent to each other. It is possible to easily connect the terminals to the outside by using one coupler. Therefore, the combination battery is suitable for an electrically powered scooter, an electric car or the like which requires high voltage.

Control of the battery temperature is very important for batteries of electrically powered scooters, electric cars or the like. The combination battery described above is optimal as a battery for these electrical machines, since it is possible to communicate the output of the combination battery and also the temperature output to the outside by using one coupler. Therefore, the combination battery has a very broad application.

## Claims

1. A combination battery comprising: a plurality of cells (1-16) connected in series and arranged in rows and columns, each of the cells in a row having the same arrangement of polarity as that of the adjacent cell in that row, each of the cells in a column having an arrangement of polarity different from that of the adjacent cell in that column; characterised in that the battery comprises 16 cells arranged in a matrix of 4 rows and 4 columns, there being a waterproof coupler (18) through which the positive and negative terminals of the battery are drawn from two cells (1, 16) which are adjacent to each other, one of the two cells being in the second column and the other of the two cells being in the third column.

2. A combination battery as claimed in claim 1, wherein a temperature sensor (19) is fixed on a connecting plate (17) for connecting adjacent cells to enable the temperature measurement of the battery, and the terminals of the battery are attached to the waterproof coupler (18).

3. A combination battery as claimed in claim 2, having a connecting plate (17) on which a temperature sensor (19) is fixed in contact with one of the following cells (1-16):
the cell in the second column and second row;
the cell in the second column and third row;
the cell in the third column and second row; and
the cell in the third column and third row.

4. A combination battery as claimed in claim 1, 2 or 3, wherein the positive and negative terminals of the battery are drawn from adjacent positive and negative terminals of the said adjacent two cells (1, 16).

5. A combination battery as claimed in any of claims 1 to 4, wherein said 16 cells (1-16) are connected in series, from the cell of the second column in the first row to the cell of the third column in the first row, through the cells of the first, second, third and fourth rows in the first column, the cells of the fourth, third and second rows in the second column, the cells of the second, third and fourth rows in the third column, and the cells of the fourth, third, second and first rows in the fourth column, in order.

6. A combination battery as claimed in any of claims 1 to 4, wherein said 16 cells (1-16) are connected in series, from the cell of the second column in the first row to the cell of the third column in the first row, through the cell of the first column in the first row, the cells of the first, second and third columns in the second row, the cells of the third, second and first columns in the third row, the cells of the first, second and third columns in the fourth row, and the cells of the fourth, third, second and first rows in the fourth column, in order.

7. A combination battery as claimed in any of claims 1 to 4, wherein said 16 cells (1-16) are connected in series, from the cell of the second column in the first row to the cell of the third column in the first row, through the cell of the first column in the first row, the cells of the first and second columns in the second row, the cells of the second and first columns in the third row, the cells of the first, second, third and fourth columns in the fourth row, the cells of the fourth and third columns in the third row, the cells of the third and fourth columns in the second row, and the cell of the fourth column in the first row, in order.

8. A combination battery as claimed in any of claims 1 to 4, wherein said 16 cells (1-16) are connected in series, from the cell of the second column in the first row to the cell of the third column in the first row, through the cells of the first, second, third and fourth rows in the first column, the cells of the second, third and fourth columns in the fourth row, the cells of the fourth, third and second columns in the third row, the cells of the second, third and fourth columns in the second row, and the cell of the fourth column in the first row, in order.

9. A combination battery as claimed in any preceding claim, wherein each of the cells (1-16) is selected from the group consisting of a lead cell, a nickel-cadmium cell, a nickel-zinc cell, and a nickel-hydrogen cell.

## Patentansprüche

1. Kombinationsbatterie, umfassend:
eine Mehrzahl von Zellen (1-16), welche in Reihe verbunden sind und in Reihen und Spalten angeordnet sind, wobei jede der Zellen in einer Reihe die gleiche Polaritätsanordung aufweist wie die benachbarte Zelle in dieser Reihe, wobei jede der Zellen in einer Spalte eine Polaritätsanordnung aufweist, welche sich von derjenigen der benachbarten Zelle in dieser Spalte unterscheidet,
dadurch gekennzeichnet, daß die Batterie 16 Zellen umfaßt, welche in einer Matrix von 4 Reihen und 4 Spalten angeordnet sind, wobei ein wasserdichter Koppler (18) vorgesehen ist, durch welchen die positiven und die negativen Anschlüsse der Batterie von zwei Zellen (1, 16) weggeführt sind, welche einander benachbart sind, wobei eine der beiden Zellen in der zweiten Spalte angeordnet ist und die andere der beiden Zellen in der dritten Spalte angeordnet ist.

2. Kombinationsbatterie nach Anspruch 1, worin ein Temperatursensor (19) an einer Verbindungsplatte (17) zur Verbindung benachbarter Zellen festgelegt ist, um eine Temperaturmessung der Batterie zu ermöglichen, und wobei die Anschlüsse der Batterie an dem wasserdichten Koppler (18) angebracht sind.

3. Kombinationsbatterie nach Anspruch 2, umfassend eine Verbindungsplatte (17), an welcher ein Temperatursensor (19) in Kontakt mit einer der folgenden Zellen (1-16) festgelegt ist:
die Zelle in der zweiten Spalte und der zweiten Reihe;
die Zelle in der zweiten Spalte und der dritten Reihe;
die Zelle in der dritten Spalte und der zweiten Reihe; und
die Zelle in der dritten Spalte und der dritten Reihe.

4. Kombinationsbatterie nach Anspruch 1, 2 oder 3, worin die positiven und negativen Anschlüsse der Batterie von benachbarten posiviten und negativen Anschlüssen der beiden benachbarten Zellen (1, 16) weggeführt sind.

5. Kombinationsbatterie nach einem der Ansprüche 1 bis 4, worin die 16 Zellen (1-16) von der Zelle der zweiten Spalte in der ersten Reihe bis zur Zelle der dritten Spalte in der ersten Reihe durch die Zellen der ersten, zweiten, dritten und vierten Reihe in der ersten Spalte, die Zellen der vierten, dritten und zweiten Reihe in der zweiten Spalte, die Zellen der zweiten, dritten und vierten Reihe in der dritten Spalte und die Zellen der vierten, dritten, zweiten und ersten Reihe in der vierten Spalte nacheinander in Reihe verbunden sind.

6. Kombinationsbatterie nach einem der Ansprüche 1 bis 4, worin die 16 Zellen (1-16) von der Zelle der zweiten Spalte in der ersten Reihe bis zur Zelle der dritten Spalte in der ersten Reihe durch die Zelle der ersten Spalte in der ersten Reihe, die Zellen der ersten, zweiten und dritten Spalte in der zweiten Reihe, die Zellen der dritten, zweiten und ersten Spalte in der dritten Reihe, die Zellen der ersten, zweiten und dritten Spalte in der vierten Reihe und die Zellen der vierten, dritten, zweiten und ersten Reihe in der vierten Spalte nacheinander in Reihe verbunden sind.

7. Kombinationsbatterie nach einem der Ansprüche 1 bis 4, worin die 16 Zellen (1-16) von der Zelle der zweiten Spalte in der ersten Reihe bis zur Zelle der dritten Spalte in der zweiten Reihe durch die Zelle der ersten Spalte in der ersten Reihe, die Zellen der ersten und zweiten Spalte in der zweiten Reihe, die Zellen der zweiten und ersten Spalte in der dritten Reihe, die Zellen der ersten, zweiten, dritten und vierten Spalte in der vierten Reihe, die Zellen der vierten und dritten Spalte in der dritten Reihe, die Zellen der dritten und vierten Spalte in der zweiten Reihe und die Zelle der vierten Spalte in der ersten Reihe nacheinander in Reihe verbunden sind.

8. Kombinationsbatterie nach einem der Ansprüche 1 bis 4, worin die 16 Zellen (1-16) von der Zelle der zweiten Spalte in der ersten Reihe bis zur Zelle der dritten Spalte in der ersten Reihe durch die Zellen der ersten, zweiten, dritten und vierten Reihe in der ersten Spalte, die Zellen der zweiten, dritten und vierten Spalte in der vierten Reihe, die Zellen der vierten, dritten und zweiten Spalte in der dritten Reihe, die Zellen der zweiten, dritten und vierten Spalte in der zweiten Reihe und die Zelle der vierten Spalte in der ersten Reihe nacheinander in Reihe verbunden sind.

9. Kombinationsbatterie nach einem der vorhergehenden Ansprüche, worin jede der Zellen (1-16) aus einer Gruppe ausgewählt ist, bestehend aus einer Bleizelle, einer Nickelcadmiumzelle, einer Nickelzinkzelle und einer Nickelwasserstoffzelle.

## Revendications

1. Batterie combinée comprenant :
plusieurs cellules (1-16) connectées en série et agencées en rangées et colonnes, chacune des cellules d'une rangée ayant le même agencement de polarité que celui de la cellule voisine dans cette rangée, chacune des cellules d'une colonne ayant un agencement de polarité différent de celui de la cellule voisine dans cette colonne ;
caractérisée en ce que la batterie comprend seize cellules agencées en une matrice de quatre rangées et quatre colonnes, en ce qu'il est prévu un coupleur étanche à l'eau (18) à travers lequel les bornes positive et négative de la batterie sont sorties de deux cellules (1,16), qui sont voisines l'une de l'autre, l'une des deux cellules étant dans la seconde colonne et l'autre des deux cellules étant dans la troisième colonne.

2. Batterie combinée suivant la revendication 1, dans laquelle un capteur de température (19) est fixé sur une plaque de connexion (17) pour connecter des cellules voisines afin de permettre la mesure de la température de la batterie, et les bornes de la batterie sont fixées au coupleur étanche à l'eau (18).

3. Batterie combinée suivant la revendication 2, ayant une plaque de connexion (17) sur laquelle un capteur de température (19) est fixé en contact avec une des cellules suivantes (1-16) :
la cellule dans la seconde colonne et la seconde rangée ;
la cellule dans la seconde colonne et la troisième rangée ;
la cellule dans la troisième colonne et la seconde rangée ; et
la cellule dans la troisième colonne et la troisième rangée.

4. Batterie combinée suivant la revendication 1,2 ou 3, dans laquelle les bornes positive et négative de la batterie sont prises sur les bornes positive et négative voisines desdites deux cellules voisines (1,16).

5. Batterie combinée suivant l'une quelconque des revendications 1 à 4, dans laquelle lesdites seize cellules (1-16) sont connectées en série, à partir de la cellule de la seconde colonne dans la première rangée jusqu'à la cellule de la troisième colonne dans la première rangée à travers les cellules des première, seconde, troisième et quatrième rangées dans la première colonne, les cellules des quatrième, troisième et seconde rangées dans la seconde colonne, les cellules des seconde, troisième et quatrième rangées dans la troisième colonne et les cellules des quatrième, troisième, seconde et première rangées dans la quatrième colonne, dans l'ordre.

6. Batterie combinée suivant l'une quelconque des revendications 1 à 4, dans laquelle lesdites seize cellules (1-16) sont connectées en série, à partir de la cellule de la seconde colonne dans la première rangée jusqu'à la cellule de la troisième colonne dans la première rangée, à travers la cellule de la première colonne dans la première rangée, les cellules des première, seconde et troisième colonnes dans la seconde rangée, les cellules des troisième, seconde et première colonnes dans la troisième rangée, les cellules des première, seconde et troisième colonnes dans la quatrième rangée et les cellules des quatrième, troisième, seconde et première rangées dans la quatrième colonne, dans l'ordre.

7. Batterie combinée suivant l'une quelconque des revendications 1 à 4, dans laquelle lesdites seize cellules (1-16) sont connectées en série, à partir de la cellule de la seconde colonne dans la première rangée jusqu'à la cellule de la troisième colonne dans la première rangée, à travers les cellules de la première colonne dans la première rangée, les cellules des première et seconde colonnes dans la seconde rangée, les cellules des seconde et première colonnes dans la troisième rangée, les cellules des première, seconde, troisième et quatrième colonnes dans la quatrième rangée, les cellules des quatrième et troisième colonnes dans la troisième rangée, les cellules des troisième et quatrième colonnes dans la seconde rangée et les cellules de la quatrième colonne dans la première rangée, dans l'ordre.

8. Batterie combinée suivant l'une quelconque des revendications 1 à 4, dans laquelle lesdites seize cellules (1-16) sont connectées en série à partir de la cellule de la seconde colonne dans la première rangée jusqu'à la cellule de la troisième colonne dans la première rangée, à travers les cellules des première, seconde, troisième et quatrième rangées dans la première colonne, les cellules des seconde, troisième et quatrième colonnes dans la quatrième rangée, les cellules des quatrième, troisième et seconde colonnes dans la troisième rangée, les cellules des seconde, troisième et quatrième colonnes dans la seconde rangée et les cellules de la quatrième colonne dans la première rangée, dans l'ordre.

9. Batterie combinée suivant l'une quelconque des revendications précédentes, dans laquelle chacune des cellules (1-16) est choisie dans le groupe comprenant une cellule au plomb, une cellule au nickel-cadmium, une cellule au nickel-zinc et une cellule au nickel-hydrogène.
